# EUROPEAN PATENT SPECIFICATION

(11) **EP 2 301 394 B1**
(45) Date of publication and mention of the grant of the patent: **18.04.2012**
(21) Application number: 09425371.3
(22) Date of filing: 25.09.2009
(51) Int. Cl.: A47J 31/36

(54) **Device for preparing infused beverages having improved capsule feeding means**
Vorrichtung zur Herstellung von Brühgetränken mit verbessertem Kapselzuführmittel
Dispositif pour la préparation de boissons infusées doté d'un moyen d'alimentation en capsules amélioré

(43) Date of publication of application: 30.03.2011
(73) Proprietor: F.A.S. International S.p.A., 36015 Schio (Vicenza) (IT)
(72) Inventor: Morabito, Giuseppe, 36014 Santorso (Vicenza) (IT)
(74) Representative: Perani, Aurelio

(56) References cited:
- EP-A- 1 541 070
- US-B1- 6 240 832

## Description

The present invention refers to a device for preparing infused beverages starting from a capsule, for example, hot beverages like espresso coffee, according to the preamble of claim 1. Such a device is disclosed e.g. in EP1541070.

It is known in the field to make machines for making infused beverages from a rigid capsule containing an infused product, which in use, is passed through by pressurised water to make the beverage.

A machine of this type is known from US6240832. The machine described in this document has one or more cylindrical cartridges, each suitable for containing a column of infusion capsules. The machine also comprises an infusion station, arranged at a lower height than the cartridges.

Every cartridge (or storage compartment) has means for withholding the capsules, suitable for releasing a single capsule at each infusion cycle, to feed to the infusion station. Such withholding means comprise two hooks which act on opposite sides of the last capsule of the column of capsules contained in a cartridge. The hooks can be commanded to spread apart in order to allow the capsule to vertically drop towards the infusion station.

This prior art has a series of drawbacks.

In particular, each cartridge (or storage compartment) must be provided with means for withholding and releasing the capsules, this leads to a certain complexity of the machine and a high cost.

Moreover, since there are numerous withholding mechanisms (one for each column of capsules), it is more likely for there to be seizures, faults or breakdowns. The machine might thus require frequent maintenance. The withholding system of the capsules, moreover, does not allow the capsules to be oriented or tipped as wished for feeding them to the infusion station.

In view of the described prior art, the purpose of the present invention is that of providing a device for preparing infused beverages having an adequately cost-effective and simple structure. A further purpose of the invention is that of providing a device which makes it possible to safely and reliably manage the feeding of different types of capsules to the infusion chamber.

Another purpose is that of providing a device provided with means for feeding the capsules which is able to orientate the capsule as wished to feed the infusion station.

In accordance with the present invention, such purposes are achieved with a device for making infused beverages suitable for extracting the beverage from a capsule containing the infused product, comprising:
- at least one storage compartment suitable for containing a column of capsules stacked one on top of the other,
- an infusion station suitable for making an infusion liquid flow through a capsule to obtain the beverage, and
- means for feeding the capsules from the storage compartment to the infusion station by the force of gravity, said means for feeding the capsules comprising a withholding element mobile between a resting position which prevents a capsule contained in the storage compartment from dropping towards the infusion station and an operative position which allows the capsule to drop towards the infusion station, characterized in that said withholding element comprises:
   - a first portion that in said resting position is arranged below the last capsule of the column of capsules contained in a storage compartment to support the column of capsules and
   - a second portion that in said operative position of the withholding element interferes with the dropping movement of the penultimate capsule of the column of capsules.

The characteristics and the advantages of the present invention shall become clear from the following detailed description of a practical embodiment, given as an example and not for limiting purposes with reference to the attached drawings, in which:
- figure 1 shows an overall perspective view of a device according to the invention,
- figure 2 shows a perspective view analogous to the previous one, in which some parts have been removed to allow the withholding element of the capsules to be seen,
- figure 3 shows a view analogous to the previous one, in which the withholding element is in the operative position,
- figure 4 shows a section view showing the withholding element in the resting position,
- figure 5 shows a view which is analogous to the previous one, in which the withholding element is inclined in the operative dispensing position of a capsule,
- figure 6 shows a view which is analogous to the previous one in which the capsule is sliding towards the supply channel to the infusion station,
- figure 7 shows a view which is analogous to the previous one, with the capsule sliding in the supply channel to the infusion station,
- figure 8 shows a section view of the infusion station.

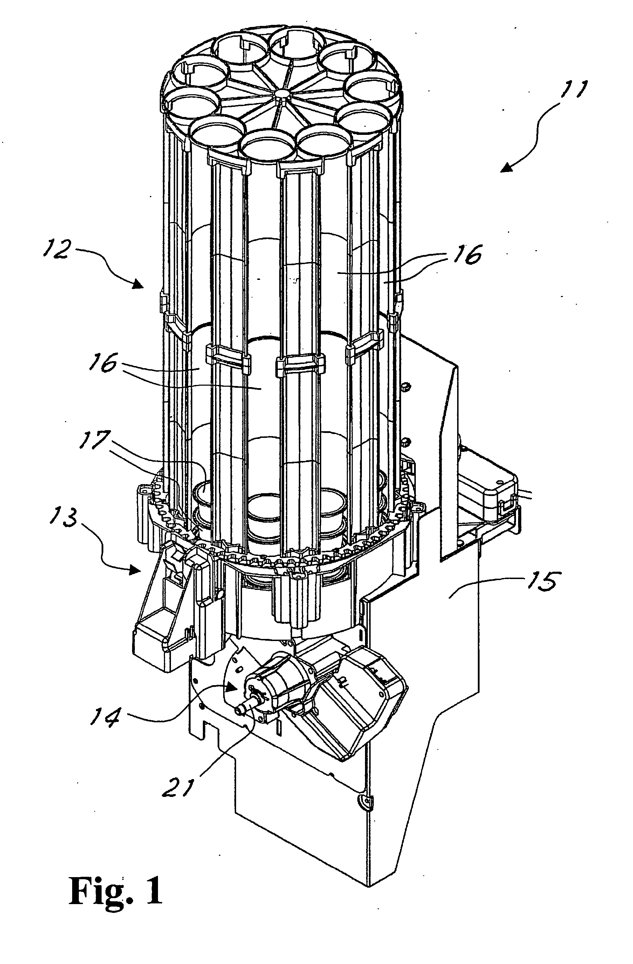

Figure 1 shows a device 11 for preparing infused beverages, suitable for extracting the beverage from a rigid capsule containing an infused product (for example, in powder). The device 11 can prepare, for example, hot beverages like espresso coffee. The device 11 can be inserted inside a casing of an automatic machine (or distributor) for dispensing beverages.

The device 11 comprises storage compartments 16, each suitable for containing a column of capsules 17 intended to be used for preparing beverages.

Preferably, the storage compartments 16 are formed by substantially hollow cylindrical seats.

Preferably, the seats of the storage compartments 16 are arranged on a turntable 12 which can rotate around a vertical axis. The seats of the storage compartments 16 are arranged on the outer periphery of the turntable 12. Such seats are shaped so as to keep the capsules 17 stacked having axes oriented vertically, when in use.

The storage compartments 16 are open at the bottom, so as to allow the capsules 17 to be fed towards the infusion station 14. Preferably, each storage compartment 16 is also provided with a longitudinal slit, facing outwards from the turntable 12, to facilitate the loading operations of the capsules 17.

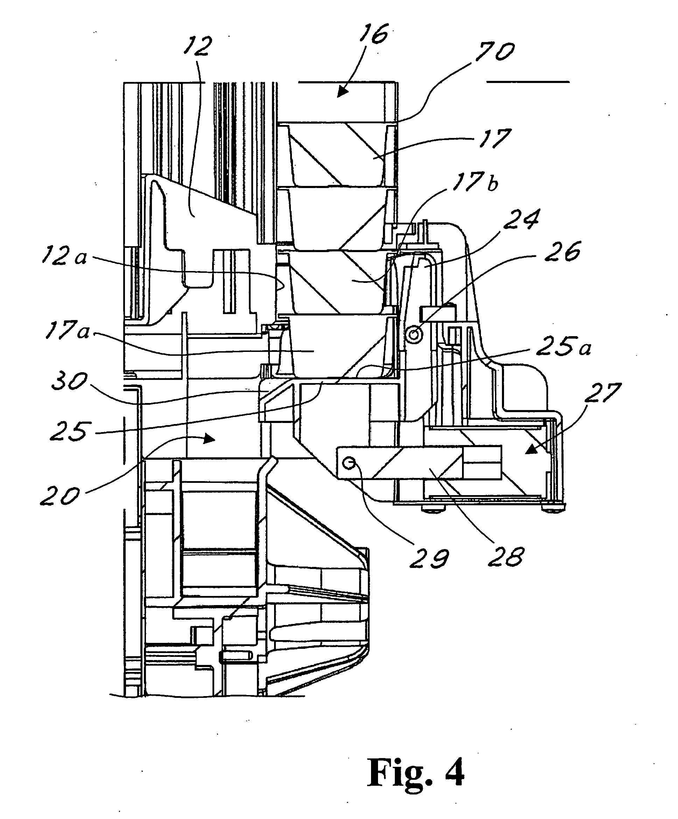

The capsules 17 generally have a cylindrical shape, preferably slightly tapered, and have an annular flange 70 (indicated in fig. 4) at an upper surface opposite the tapered bottom 31.

The turntable 12 is mounted in a rotatable manner on a fixed frame 15 of the machine. The turntable 12 can be set into rotation to bring a desired column of capsules 17 to the feeding means 13, arranged at the base of the turntable 12. The turntable 12 and the storage compartments 16, are moved through suitable automatic movement means, which can be made *per se,* according to any prior art.

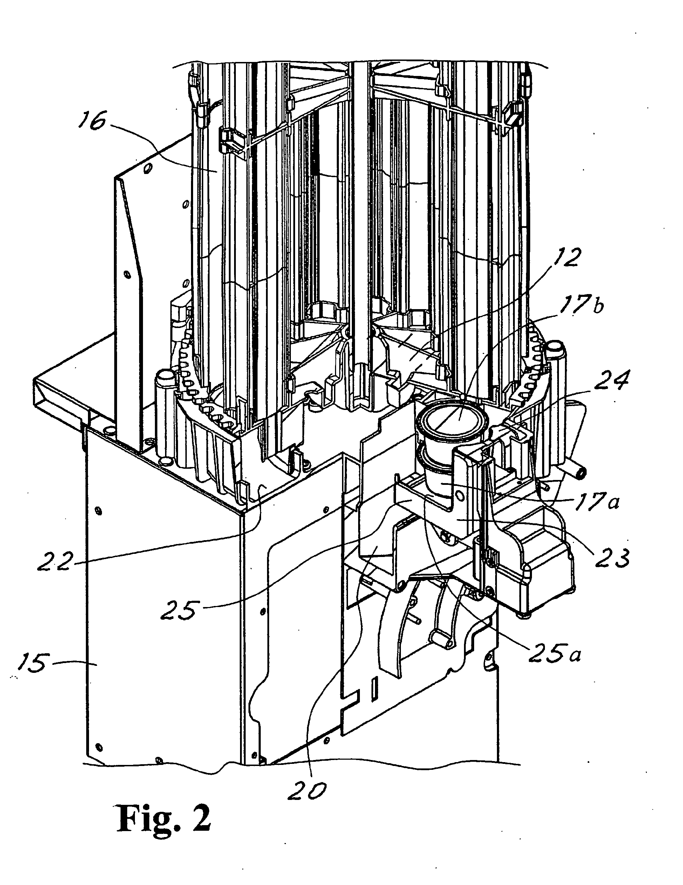

The frame 15 of the device comprises a fixed wall 22, arranged below the storage compartments 16 (fig. 2). The wall 22 supports the capsules 17 contained in the storage compartments 16 which are not arranged at the feeding means 13. In a preferred embodiment of the invention, the wall 22 is a substantially annular horizontal wall, interrupted at the feeding means 13.

The means 13 have the function of feeding the capsules 17 into the infusion station 14, arranged below the storage compartments 16.

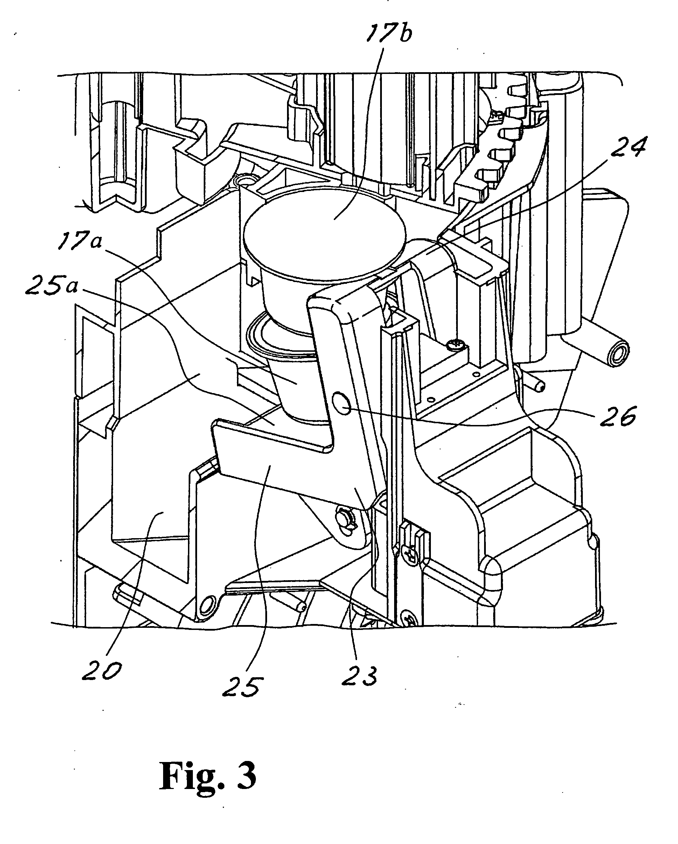

In particular, the means 13 are suitable for feeding the capsules 17, by the force of gravity, into a channel 20 (shown in figure 2) intended to convey said capsules inside it to the infusion station 14. The means 13 for feeding the capsules comprise a withholding element 23 hinged, with a horizontal axis hinging 26, to the fixed frame 15 of the machine (fig. 3).

The withholding element 23 is mobile between a resting position (fig. 2) in which it withholds the capsules inside the storage compartment 16, and an operative position (fig. 3), in which the last capsule 17a of the column can slide towards the infusion station 14.

By "last capsule 17a" of the column, it is meant the capsule which is arranged at the lowest height in a column of capsules.

The withholding element 23 is moved between the two positions by means of an actuation 27, which can be made according to any prior art.

In particular, the actuation 27 can comprise an element 28 which can translate horizontally on command, and which is hinged through the hinging 29 to the withholding element 23.

The hinging 29 can advantageously be positioned below the portion 25 of the withholding element 23.

As clearly shown in figures from 2 to 7, the withholding element 23 comprises a first portion 25 and a second portion 24.

The first portion 25 is arranged below the last capsule 17a of the column of capsules contained in a storage compartment 16. In particular, the portion 25 is arranged below the bottom 31 of the capsule 17a, so as to support it when the storage compartment 16 is arranged at the feeding means 13.

This provision allows a device to be made in which there are many storage compartments and the feeding of the capsules is commanded by a single mobile element, unlike the prior art of US6240832, in which each column of capsules needed two elements acting on opposite sides of the last capsule.

Preferably, the portion 25 extends at least up to an axis of the storage compartment 16 and of the capsules contained inside them.

Preferably, the portion 25 of the withholding element 23 comprises a resting surface 25a which is substantially horizontal when the withholding element is in the resting position (fig. 2). The resting surface 25a is preferably flush with the wall 22 on which the capsules of the storage compartments 17, which are not above the withholding element 23, lay.

This provision facilitates the translation of the storage compartments, and of the columns of capsules, towards the feeding means 13 and away from them, so that it is possible to easily select the storage compartment 16 with which to feed the capsules to the infusion station. In substance, the surface 25a is adjacent to the wall 22, when the element 23 is in the resting position, to form an almost continuous floor the columns of capsules can slide on.

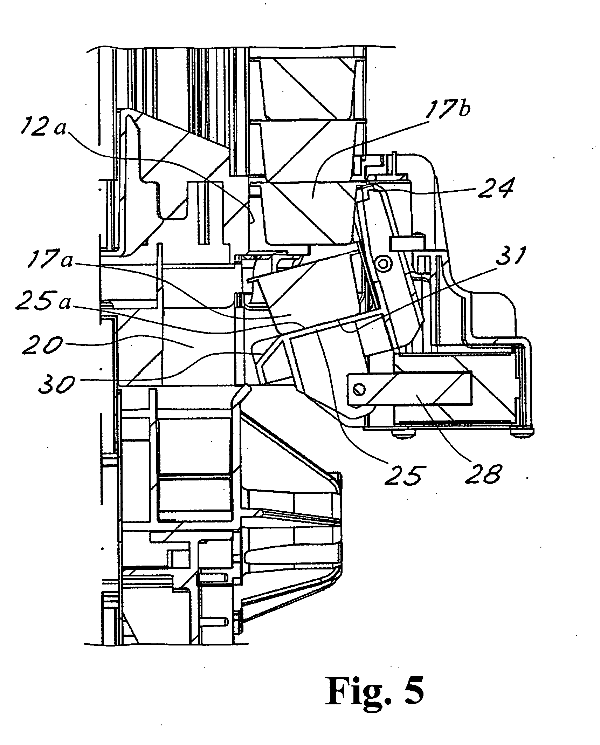

When the withholding element 23 is brought into the operative position, the resting surface 25a is inclined with respect to the horizontal, preferably by an angle of between 10° and 25°, more preferably of about 15° (fig. 5).

When the withholding element 23 is in the operative position, the last capsule 17a of the column of capsules can slide towards the infusion station 14, through the channel 20.

In the resting position, the second portion 24 is arranged away from the capsules 17 contained in the storage compartment 16, preferably near them (fig. 4).

The second portion 24, in the operative position (fig. 5), interferes with the dropping movement of the penultimate capsule 17b, i.e., the capsule which is arranged directly above the last capsule 17a of the column. In this way, only the last capsule 17a of the column slides towards the infusion station 14, and the other capsules are withheld inside the storage compartment 16.

The portion 24 comprises an upper resting surface which supports the capsule 17b below the flange 70 of the capsule itself.

Preferably, the upper resting surface of the portion 24 is arc of circle shaped, so as to correspond to the perimeter of the capsule below the flange 70 (see fig. 3). Preferably, in the operative position, the portion 24 can press the capsule 17b against the inner side wall of the storage compartment 16 opposite with respect to the portion 24. In this way it can be ensured for the capsule 17b and for the capsules above it to be blocked in a more reliable manner, thus ensuring a correct feeding of the last capsule 17a.

Preferably, the resting surface of the portion 24 is arranged almost at the height of the flange 70 of the penultimate capsule 17b of the column, when the withholding element 23 is in its resting position. This allows the penultimate capsule 17b to be blocked immediately when the withholding element 23 enters in its operative position, substantially without lowering the capsule 17b with respect to the initial position.

Since the last capsule 17a is not under the weight of the capsules above, it can thus easily slide towards the channel 20, following the inclined profile of the portion 25 of the withholding element 23. This allows the capsule 17a to be oriented in a desired way, making it pass from a position with a vertical axis to a position with a horizontal axis.

Preferably, the withholding element 23 is generically L shaped, in which the two portions 24 and 25 form the two legs of the "L". The portions 24 and 25 are substantially perpendicular to one another.

The hinging 26 is arranged at the leg of the "L" which forms the portion 24 of the withholding element, at about mid height of the portion 24.

The specific positioning of the hinging 26 allows an optimal inclination of the portion 25 (and of the resting surface 25a) to be obtained and simultaneously the necessary movement of the upper end of the portion 24 to interfere with the dropping movement of the capsule 17b. Advantageously, the portion 25 also comprises a sliding surface 30, arranged near to a free end of the portion 25. In particular, the sliding surface 30 is arranged downstream of the resting surface 25a, in the direction of the channel 20.

The sliding surface 30 is inclined with respect to the resting surface 25a, preferably by an angle of between 30° and 60°, more preferably comprised between 40° and 50°, and even more preferably by about 45°.

The resting surface 25a, advantageously, extends in a way such as to substantially cover all the transverse section of the seat of the storage compartment 16.

The channel 20 has a transverse section which is such that the dropped capsules 17 are conducted inside it with their axis oriented in an almost horizontal position.

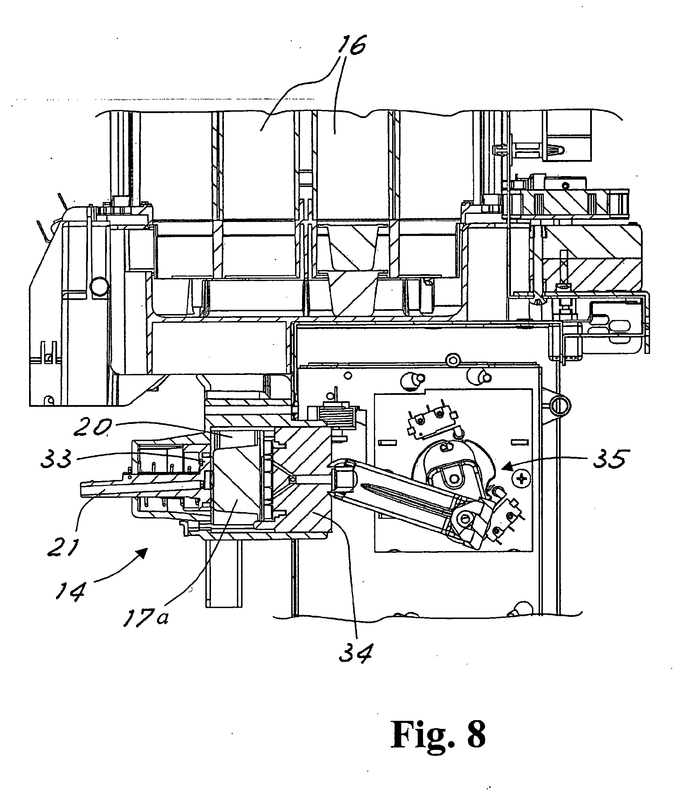

The channel 20 conducts the capsules 17 from the feeding means 13 to the infusion station 14, which comprises the two jaws 33, 34 (shown in figure 8). In particular, the channel 20 conducts the capsules in the area comprised between the two jaws 33, 34.

The two jaws 33, 34 can move horizontally. The device comprises means to push the jaws closer together, with the interposition of a capsule 17. The jaw 33 is pushed by a spring towards the jaw 34, which is mobile under the action of an electro mechanic actuation 35. The jaw 34 also has means for perforating the capsule and to make the infusion liquid under pressure to flow through the capsule itself. The beverage is then dispensed through the channel 21, formed in the jaw 33.

The electronic control means together with the device 11, are suitable for controlling the actuation of various components and of various functions of the machine (such as dispensing the infusion liquid, the actuation of the withholding element 23, the movement of the jaws 33, 34 of the infusion station, the rotation of the turntable 12, etc...). The control means are made *per se* according to the prior art, and shall not be described here any further.

Hereafter we shall briefly describe the operation of the device 11 and, in particular, the feeding means 13 of the capsules, with reference to figures 4-8.

Initially, by making the turntable 12 rotate, a desired storage compartment 16 enters such a position that the relative column of capsules 17 is positioned above the portion 25 of the withholding element 23.

In figure 4 the withholding element 23 is in its resting position, with the resting surface 25a oriented almost horizontally so that the bottom 31 of the capsule 17a can stably rest on it.

The wall 12a of the turntable, which contributes to forming the side wall of the hollow seat of a storage compartment 16, ensures that the capsule 17a does not slide towards the channel 20. In figure 5, the withholding element 23 is in its operative position, with the resting surface 25a inclined, preferably, by about 15° with respect to the horizontal. The portion 24 is moved towards the capsule 17b, until it interferes with its dropping movement, possibly pressing the capsule against the wall 12a of the turntable.

The capsule 17a can slide freely, following the inclination of the resting surface 25a with its bottom 31.

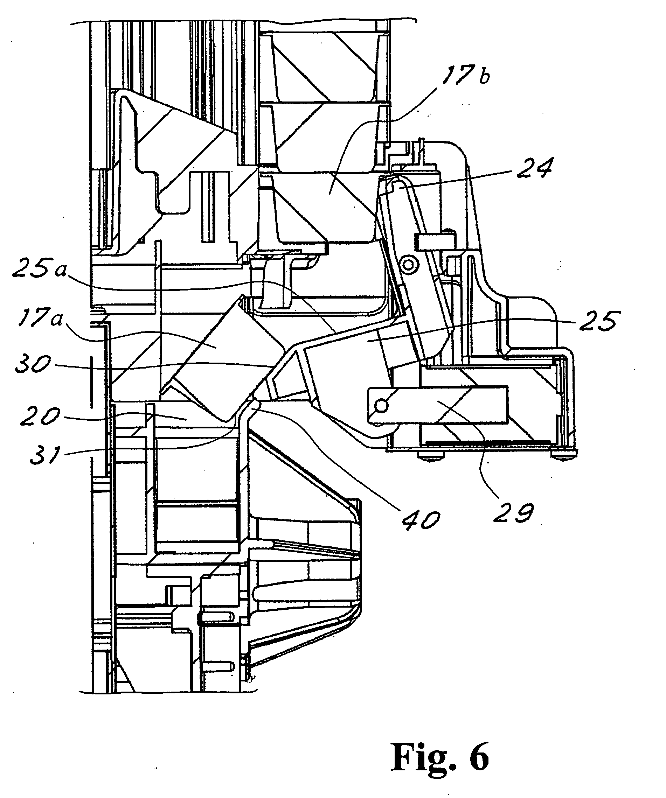

In figure 6, the capsule 17a, after sliding on the resting surface 25a, slides on the sliding surface 30, which gives a greater inclination to the bottom 31 of the capsule 17a. The channel 20 can preferably have a guide surface 40, inclined by an angle which is substantially equal to that of the sliding surface 30 in the operative position of the withholding element 23.

The capsule 17a is thus sent towards the channel 30 with its axis oriented substantially inclined with respect to the vertical, by more than 45°.

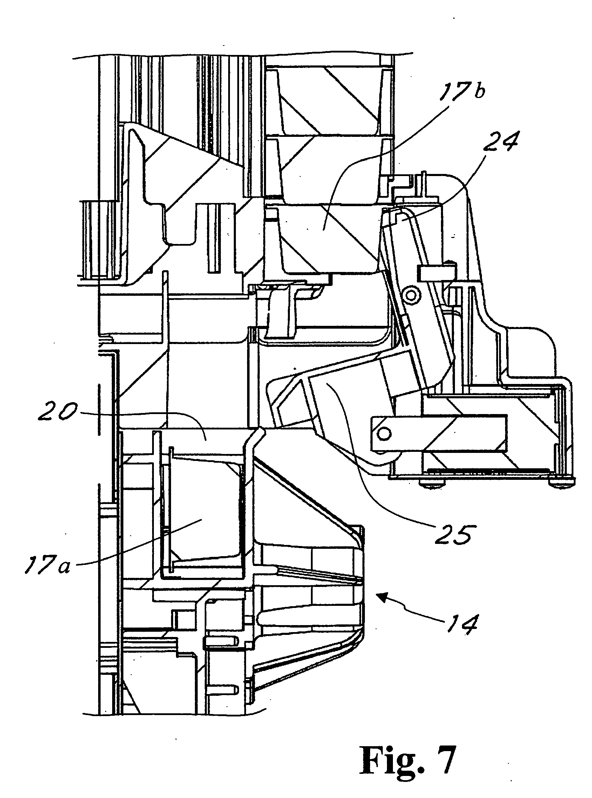

Figure 7 shows the capsule 17a with horizontal axis, that is sliding inside the channel 20 and is about to reach the infusion station 14.

Figure 8 shows the capsule 17a after having reached the infusion station, between the two jaws 33, 34. The subsequent step foresees the infusion of the beverage with liquid passing through the capsule and the dispensing through the channel 21. The capsule can then be evacuated from the device.

The withholding element can thus be taken back into the resting position, and the capsule 17b falls towards the position previously occupied by the capsule 17a, resting on the surface 25a of the withholding element 23.

At this point it should be clear how the purposes of the present invention have been achieved.

In particular, a device for making infused beverages has been provided having a simple and cost-effective structure. The device allows the capsules to be fed to the infusion station in a reliable manner, without needing complex or expensive mechanisms or actuations. By a single mobile element the feeding of the capsules can be commanded. The device requires reduced maintenance. Moreover, the device allows the capsule, to be fed to the infusion station, to be selected, from a plurality of storage compartments (for example, ten), which can contain capsules having different infusion products. Even though there are many storage compartments, the device according to the invention allows only a withholding element to be used for commanding the feeding of the capsule. Moreover, the withholding element 23 also carries out the function of orienting and tipping over the capsule to be fed to the infusion station, arranging it with a horizontal axis. Such an operation is carried out in a reliable manner also thanks to the withholding of the penultimate capsule of the column, again thanks to the withholding element 23.

Of course, a man skilled in the art, with the purpose of satisfying contingent and specific requirements, can carry out numerous modifications and variants to the aforementioned configurations, all covered by the scope of protection of the invention as defined by the following claims.

## Claims

1. Device for making infused beverages suitable for extracting the beverage from a capsule containing the infused product, comprising:
- at least one storage compartment (16) suitable for containing a column of capsules (17) stacked one on top of the other,
- an infusion station (14) suitable for making an infusion liquid flow through a capsule (17) to obtain the beverage, and
- means (13) for feeding the capsules from the storage compartment (16) to the infusion station (14) by the force of gravity, said means (13) for feeding the capsules (17) comprising a withholding element (23) mobile between a resting position which prevents a capsule (17), contained in the storage compartment, from dropping towards the infusion station (14) and an operative position which allows the capsule (17) to drop towards the infusion station (14), said withholding element (23) comprising:
- a first portion (25) that in said resting position is arranged below the last capsule (17a) of the column of capsules contained in a storage compartment (16) to support the column of capsules and
- a second portion (24) that, in said operative position of the withholding element (23), interferes with the dropping movement of the penultimate capsule (17b) of the column of capsules, **characterized in that** said device comprises a plurality of storage compartments (16) and a single withholding element (23), movement means being present suitable for selectively bringing one of the storage compartments (16) in such a position that the capsules (17) contained inside it are arranged above the first portion (25) of the withholding element (23).

2. Device according to claim 1, **characterized in that** said withholding element (23) can rotate around a horizontal axis to move between said operative and resting positions.

3. Device according to claim 1, **characterized in that** said storage compartments (16) can rotate around a vertical axis in a fixedly connected manner.

4. Device according to claim 1 or 3, **characterized in that** said storage compartments (16) are open at the bottom, the device comprising a fixed wall (22) on which the capsules (17) lay in the storage compartments (16) which are not arranged above the withholding element (23).

5. Device according to one or more of the previous claims, **characterized in that** the first portion (25) of the withholding element (23) is suitable for making the capsule (17) slide obliquely when the withholding element (23) is in the operative position.

6. Device according to one or more of the previous claims, **characterized in that** the first portion (25) of the withholding element comprises a resting surface (25a) that in the resting position is substantially horizontal so as to support the column of capsules (17) contained in the storage compartment (16).

7. Device according to claim 6, **characterized in that** said resting surface (25a) is arranged substantially flush with and substantially adjacent to said fixed wall (22) of the frame, when the withholding element (23) is in the resting position.

8. Device according to claim 6, **characterized in that** said first portion (25) also comprises a sliding surface (30) inclined with respect to the resting surface (25a), said sliding surface (30) being arranged at a free end of the first portion (25) of the withholding element (23).

9. Device according to one or more of the previous claims, **characterized in that** in the operative position the withholding element (23) is inclined by an angle of between 10° and 25° with respect to the resting position.

10. Device according to one or more of the previous claims, **characterized in that** said second portion (24) of the withholding element (23) comprises a resting surface which is arc of circle shaped suitable for being positioned below an upper annular flange (70) of the penultimate capsule (17b) contained in the storage compartment (16), when the withholding element (23) is in the operative position.

11. Device according to one or more of the previous claims, **characterized in that** the first (25) and the second (24) portion of the withholding element (23) are substantially perpendicular to one another, and are generally arranged in the shape of an "L".

12. Device according to one or more of the previous claims, **characterized in that** said first portion (25) in the operative position is inclined so as to induce a tipping of the capsule (17a) from a position with its axis oriented vertically to a position with its axis oriented horizontally.

13. Device according to one or more of the previous claims, **characterized in that** the first portion (25) of the withholding element (23) in the resting position and/or in the operative position intersects an axis of the capsules (17) stacked in a storage compartment (16) positioned at the withholding element (23).

14. Device according to one or more of the previous claims, **characterized in that** the storage compartment (16) has a seat for receiving the capsules (17) which is shaped in a way such as to receive the capsules with a small side clearance to keep the capsules with a vertical oriented axis.

## Patentansprüche

1. Vorrichtung zum Zubereiten von Aufgußgetränken, die zum Extrahieren des Getränkes aus einer das Aufgußprodukt enthaltenden Kapsel geeignet ist, umfassend:
- mindestens ein Speicherfach (16), das zum Aufnehmen einer Reihe von aufeinander gestapelten Kapseln (17) geeignet ist,
- eine Aufgußstation (14), die zum Erzeugen eines Aufgußflüssigkeits-Flusses durch eine Kapsel, um das Getränk zu erhalten, geeignet ist, und
- Mittel (13) zum Zuführen der Kapseln aus dem Speicherfach (16) zu der Aufgußstation (14) durch Schwerkraft, wobei die Mittel (13) zum Zuführen der Kapseln (17) ein Rückhalteelement (23) umfassen, das zwischen einer Ruhestellung, die das Fallen einer in dem Speicherfach gelagerten Kapsel (17) in Richtung der Aufgußstation (14) verhindert, und einer Arbeitsstellung, die es der Kapsel (17) erlaubt, in Richtung der Aufgußstation (14) zu fallen, beweglich ist, wobei das Rückhalteelement (23) umfaßt:
- einen ersten Abschnitt (25), der in der Ruhestellung unter der letzten Kapsel (17a) der Reihe von Kapseln, die sich in dem Speicherfach (16) befinden, angeordnet ist, um die Reihe von Kapseln zu stützen, und
- einen zweiten Abschnitt (24), der in der Arbeitsstellung des Rückhalteelements (23) die Fallbewegung der vorletzten Kapsel (17b) der Reihe von Kapseln unterbricht,
**dadurch gekennzeichnet, daß** die Vorrichtung mehrere Speicherfächer (16) und ein einziges Rückhalteelement umfaßt, wobei Bewegungsmittel vorhanden sind, die dazu geeignet sind, selektiv einen der Speicherräume (16) in eine solche Position zu bringen, daß sich die darin befindlichen Kapseln (17) über dem ersten Abschnitt (25) des Rückhalteelements (23) befinden.

2. Vorrichtung nach Anspruch 1, **dadurch gekennzeichnet, daß** das Rückhalteelement (23) um eine horizontale Achse rotieren kann, um sich zwischen der Arbeits- und der Ruhestellung zu bewegen.

3. Vorrichtung nach Anspruch 1, **dadurch gekennzeichnet, daß** die Speicherfächer (16) in einer starr verbundenen Weise um eine vertikale Achse rotieren können.

4. Vorrichtung nach Anspruch 1 oder 3, **dadurch gekennzeichnet, daß** die Speicherfächer (16) am Boden offen sind, wobei die Vorrichtung eine starre Wand (22) umfaßt, auf welcher die Kapseln (17) in den Speicherfächern (16) liegen, welche sich nicht über dem Rückhalteelement (23) befinden.

5. Vorrichtung nach einem oder mehreren der vorhergehenden Ansprüche, **dadurch gekennzeichnet, daß** der erste Abschnitt (25) des Rückhalteelements (23) dazu geeignet ist, die Kapsel (17) schräg gleiten zu lassen, wenn sich das Rückhalteelement (23) in der Arbeitsstellung befindet.

6. Vorrichtung nach einem oder mehreren der vorhergehenden Ansprüche, **dadurch gekennzeichnet, daß** der erste Abschnitt (25) des Rückhalteelements eine Ruhefläche (25a) umfaßt, die in der Ruhestellung im wesentlichen horizontal ist, um die in dem Speicherfach (16) enthaltene Reihe von Kapseln (17) zu stützen.

7. Vorrichtung nach Anspruch 6, **dadurch gekennzeichnet, daß** die Ruhefläche (25a) im wesentlichen bündig mit und im wesentlichen benachbart zu der starren Wand (22) des Rahmens angeordnet ist, wenn sich das Rückhalteelement (23) in der Ruhestellung befindet.

8. Vorrichtung nach Anspruch 6, **dadurch gekennzeichnet, daß** der erste Abschnitt (25) ferner eine bezüglich der Ruhefläche (25a) geneigte Gleitfläche (30) umfaßt, wobei die Gleitfläche (30) an einem freien Ende des ersten Abschnitts (25) des Rückhalteelements (23) angeordnet ist.

9. Vorrichtung nach einem oder mehreren der vorhergehenden Ansprüche, **dadurch gekennzeichnet, daß** das Rückhalteelement (23) in der Arbeitsstellung um einen Winkel zwischen 10° und 25° bezüglich der Ruhestellung geneigt ist.

10. Vorrichtung nach einem oder mehreren der vorhergehenden Ansprüche, **dadurch gekennzeichnet, daß** der zweite Abschnitt (24) des Rückhaltelements (23) eine kreisbogenförmig geformte Ruhefläche umfaßt, die dazu geeignet ist, unter einem oberen ringförmigen Flansch (70) der in dem Speicherfach (16) enthaltenen vorletzten Kapsel (17b) angeordnet zu werden, wenn sich das Rückhalteelement (23) in der Arbeitsstellung befindet.

11. Vorrichtung nach einem oder mehreren der vorhergehenden Ansprüche, **dadurch gekennzeichnet, daß** der erste (25) und der zweite (24) Abschnitt des Rückhalteelements (23) im wesentlichen senkrecht zueinander sind und allgemein in der Form eines "L" angeordnet sind.

12. Vorrichtung nach einem oder mehreren der vorhergehenden Ansprüche, **dadurch gekennzeichnet, daß** der erste Abschnitt (25) in der Arbeitsstellung geneigt ist, um eine Kippung der Kapsel (17a) von einer Stellung, bei der ihre Achse vertikal ausgerichtet ist, zu einer Stellung, bei der ihre Achse horizontal ausgerichtet ist, einzuleiten.

13. Vorrichtung nach einem oder mehreren der vorhergehenden Ansprüche, **dadurch gekennzeichnet, daß** der erste Abschnitt (25) des Rückhalteelements (23) in der Ruhestellung und/oder in der Arbeitsstellung eine Achse der in einem auf dem Rückhalteelement (23) angeordneten Speicherfach (16) gestapelten Kapseln (17) schneidet.

14. Vorrichtung nach einem oder mehreren der vorhergehenden Ansprüche, **dadurch gekennzeichnet, daß** das Speicherfach (16) eine Aufnahme zum Aufnehmen der Kapseln (17) hat, welche in einer Weise geformt ist, um die Kapseln mit einem kleinen Seitenabstand aufzunehmen, um die Kapseln mit vertikal ausgerichteter Achse zu halten.

## Revendications

1. Dispositif de préparation de boissons infusées, apte à extraire la boisson d'une capsule contenant le produit infusé, comprenant :
- au moins un compartiment de stockage (16) apte à contenir une colonne de capsules (17) superposées,
- une station d'infusion (14) apte à créer un flux de liquide d'infusion à travers une capsule (17) de manière à obtenir la boisson, et
- des moyens (13) pour amener par gravité lesdites capsules depuis ledit compartiment de stockage (16) à ladite station d'infusion (14), lesdits moyens (13) d'amenée des capsules (17) comprenant un élément de retenue (23) qui est mobile entre une position de repos qui empêche une capsule (17) contenue dans ledit compartiment de stockage de descendre vers ladite station d'infusion (14) et une position opérationnelle qui permet à la capsule (17) de descendre vers ladite station d'infusion (14), ledit élément de retenue (23) comprenant :
- une première portion (25) qui, dans ladite position de repos, est disposée au-dessous de la dernière capsule (17a) de la colonne de capsules contenues dans ledit compartiment de stockage (16), de manière à supporter ladite colonne de capsules, et
- une deuxième portion (24) qui, dans ladite position opérationnelle de l'élément de retenue (23), fait obstacle au mouvement de descente de l'avant-dernière capsule (17b) de la colonne de capsules,
**caractérisé par le fait que** ledit dispositif comprend une pluralité de compartiments de stockage (16) et un seul élément de retenue (23), des moyens de déplacement étant présents qui sont aptes à amener sélectivement l'un des compartiments de stockage (16) dans une position telle que les capsules (17) contenues dans celui-ci soient situées au-dessus de ladite première portion (25) de l'élément de retenue (23).

2. Dispositif selon la revendication 1, **caractérisé par le fait que** ledit élément de retenue (23) peut tourner autour d'un axe horizontal de manière à se déplacer entre lesdites positions opérationnelle et de repos.

3. Dispositif selon la revendication 1, **caractérisé par le fait que** lesdits compartiments de stockage (16) peuvent tourner d'une manière solidaire autour d'un axe vertical.

4. Dispositif selon la revendication 1 ou 3, **caractérisé par le fait que** lesdits compartiments de stockage (16) sont ouverts au fond, ledit dispositif comprenant une paroi fixe (22) sur laquelle reposent les capsules (17) dans les compartiments de stockage (16) qui ne sont pas disposés au-dessus de l'élément de retenue (23).

5. Dispositif selon l'une ou plusieurs des revendications précédentes, **caractérisé par le fait que** ladite première portion (25) de l'élément de retenue (23) est apte à amener ladite capsule (17) à glisser obliquement lorsque ledit élément de retenue (23) est en position opérationnelle.

6. Dispositif selon l'une ou plusieurs des revendications précédentes, **caractérisé par le fait que** ladite première portion (25) de l'élément de retenue comprend une surface de repos (25a) qui, dans la position de repos, est pour l'essentiel horizontale de manière à supporter la colonne de capsules (17) contenue dans le compartiment de stockage (16).

7. Dispositif selon la revendication 6, **caractérisé par le fait que** ladite surface de repos (25a) est pour l'essentiel à fleur de et pour l'essentiel adjacente à ladite paroi fixe (22) du bâti, lorsque ledit élément de retenue (23) est en position de repos.

8. Dispositif selon la revendication 6, **caractérisé par le fait que** ladite première portion (25) comprend en outre une surface de glissement (30) qui est inclinée par rapport à ladite surface de repos (25a), ladite surface de glissement (30) étant disposée à une extrémité libre de ladite première portion (25) de l'élément de retenue (23).

9. Dispositif selon l'une ou plusieurs des revendications précédentes, **caractérisé par le fait que**, dans la position opérationnelle, ledit élément de retenue (23) est incliné d'un angle compris entre 10° et 25° par rapport à la position de repos.

10. Dispositif selon l'une ou plusieurs des revendications précédentes, **caractérisé par le fait que** ladite deuxième portion (24) de l'élément de retenue (23) comprend une surface de repos conformée en arc de cercle qui est apte à être positionnée au-dessous d'un flasque annulaire supérieur (70) de l'avant-dernière capsule (17b) contenue dans le compartiment de stockage (16), lorsque ledit élément de retenue (23) est en position opérationnelle.

11. Dispositif selon l'une ou plusieurs des revendications précédentes, **caractérisé par le fait que** lesdites première (25) et deuxième (24) portions de l'élément de retenue (23) sont pour l'essentiel perpendiculaires l'une à l'autre et sont disposées généralement en « L ».

12. Dispositif selon l'une ou plusieurs des revendications précédentes, **caractérisé par le fait que**, dans la position opérationnelle, ladite première portion (25) est inclinée de manière à provoquer un basculement de la capsule (17a) d'une position dans laquelle son axe est orienté verticalement vers une position dans laquelle son axe est orienté horizontalement.

13. Dispositif selon l'une ou plusieurs des revendications précédentes, **caractérisé par le fait que** ladite première portion (25) de l'élément de retenue (23) dans la position de repos et/ou dans la position opérationnelle coupe un axe des capsules (17) empilées dans un compartiment de stockage (16) positionné sur ledit élément de retenue (23).

14. Dispositif selon l'une ou plusieurs des revendications précédentes, **caractérisé par le fait que** le compartiment de stockage (16) présente un logement pour recevoir lesdites capsules (17), qui est formé de manière à recevoir les capsules avec un petit écartement latéral afin de tenir les capsules avec un axe orienté verticalement.
